# EUROPÄISCHE PATENTSCHRIFT

(11) **EP 0 700 247 B1**
(45) Veröffentlichungstag und Bekanntmachung des Hinweises auf die Patenterteilung: **16.06.1999**
(21) Anmeldenummer: 95911145.1
(22) Anmeldetag: 17.03.1995
(51) Int. Cl.: A01M 29/00, A01M 7/00

(54) **VERBISS-SCHUTZ**
DEVICE FOR PROTECTING PLANTS AGAINST DAMAGE CAUSED BY ANIMALS
DISPOSITIF DE PROTECTION DE PLANTES CONTRE LES DEGATS CAUSES PAR DES ANIMAUX

(30) Priorität: 28.03.1994 AT 65594
(43) Veröffentlichungstag der Anmeldung: 13.03.1996
(73) Patentinhaber: Maier, Andreas, 8940 Liezen (AT)
(72) Erfinder: Maier, Andreas, 8940 Liezen (AT)
(74) Vertreter: Casati, Wilhelm, Dipl.-Ing.
(86) Internationale Anmeldenummer: AT9500050
(87) Internationale Veröffentlichungsnummer: WO9526691

(56) Entgegenhaltungen:
- DE-U- 8 601 242
- FR-A- 2 688 116
- PATENT ABSTRACTS OF JAPAN vol. 17 no. 349 (C-1078) ,2.Juli 1993 & JP,A,05 049378 (MEISHIN DENKI KK) 2.März 1993,
- PATENT ABSTRACTS OF JAPAN vol. 18 no. 610 (C [1276] ,21.November 1994 & JP,A,06 233643 (NORHARU NAKAMURA) 23.August 1994,

## Beschreibung

Die Erfindung betrifft eine Schutzvorrichtung gegen Verbiß oder Verfegen, insbesondere Sträuchern und Bäume durch Tiere, insbesondere durch Wild oder Wühlmäuse.

Aus dem Stand der Technik sind verschiedenste Arten von chemischen Wildabweisstoffen bekannt, die auf saugfähigen Materialien aufgebracht, in entsprechenden Abständen in der Landschaft mittels Pflöcken oder auf Sträuchern u.s.w. angebracht werden. Diese chemischen Wildabweisstoffe sind jedoch häufig nicht umweltverträglich, auch wenn die Wildabweisstoffe aus saugfähigen Materialien aufgebracht, in Gehäusen geschützt angeordnet werden, wie zum Beispiel in der Patentschrift JP-A-05049378. Diese mit den chemischen Wildaweisstoffen getränkten Medien müssen schließlich doch entsorgt werden.

Ein derzeit neu am Markt befindlicher Duftzaun besteht aus einem Schaumstoff, der mittels Pistole auf Leitplanken, Bäumen od.dgl. aufgetragen wird, und einem Geruchsstoff, der anfänglich in den Schaumstoff eingebracht wurde und immer wieder in den Schaumstoff nachinjiziert werden muß. Der Nachteil dieses Duftzaunes besteht jedoch darin, daß ständig eine auf Witterungseinflüsse zurückzuführende Auswaschung erfolgt. Dabei fallen aber ständig viele kleine Gebinde (Schaumbehälter, Geruchsstoffbehälter, Reinigerbehälter) an, die entsorgt werden müssen, andernfalls eine nicht unerhebliche Umweltbelastung auftreten würde.

Bei vielen diesen Anwendungsformen ist der Wind nicht berücksichtigt, der ja bekanntlich den Schutz durch Verwitterung beinahe zur Gänze aufhebt.

Aufgabe der Erfindung ist nun die Schaffung einer entsprechenden Schutzvorrichtung, die die Nachteile der oben angegebenen bekannten Schutzmaßnahmen nicht aufweist, sondern es vielmehr ermöglicht, flächendeckend und über längere Zeiträume wartungsfrei Kulturflächen (Feld und Forst) umweltfreundlich zu schützen.

Die Erfindung besteht nun darin, daß die Vorrichtung einen mit einem Aufnahmeteil verbundenen oder von diesem gebildeten Verteilerbehälter für eine Geruchsstofflüssigkeit und einen darüber angeordneten, vorzugsweise rohrförmigen Speicherbehälter für die Geruchsstofflüssigkeit, der mit dem Verteilerbehälter über einen mittels Ventil öffenbaren und verschließbaren Durchgang in Verbindung steht, der gegebenenfalls in einem im unteren Bereich des Speicherbehälters angeordneten Verschlußteil vorgesehen ist, und daß die Vorrichtung einen Windflügel aufweist, der kraftschlüssig mit einer Welle verbunden ist, die vertikal ausgerichtet und in einer das obere Ende des Speicherbehälters verschließenden Abdeckung drehbar gelagert ist.

Die erfindungsgemäße Vorrichtung gewährleistet eine besonders wirtschaftliche, jedoch dabei auch sehr wirksame Verwendung von umweltverträglichen handelsüblichen Geruchsstoffen. Die Geruchsstoffe können dabei ohne großen Aufwand aus Großgebinden in die Speicherbehälter der erfindungsgemäßen Vorrichtung eingefüllt werden, von wo sie dann durch den Durchgang in den Verteilterbehälter und aus diesem in die umgebende Atmosphäre wirksam unterstützt durch die Windflügel gelangen können.

Nach einem weiteren Merkmal der Erfindung ist vorgesehen, daß die Welle bis an den Durchgang vom Speicherbehälter zum Verteilerbehälter geführt ist und mit einem an ihrem unteren Ende angeordneten, vorzugsweise seitlich abgeflachten Fortsatz in den Durchgang hineinreicht. Hiermit wird in einfacher Weise gewährleistet, daß die Geruchsstofflüssigkeit den Durchgang passieren kann und eine Verstopfung des Durchgangs hintangehalten wird.

Die Erfindung besteht ferner darin, daß am unteren Ende der Welle ein Quirlkörper angeordnet ist, wodurch auch über längere Stehzeiten, die Fließfähigkeit der Geruchsstofflüssigkeit erhalten bleibt und ein Entmischen derselben verhindert wird.

Nach einem Merkmal der Erfindung ist ferner vorgesehen, daß das den Durchgang vom Speicherbehälter zum Verteiler behälter öffenbare und verschließbare Ventil ein Schwimmerventil ist, dessen Schwimmkörper auf der im Verteilerbehälter befindlichen Geruchsstofflüssigkeit aufschwimmt. In besonders einfacher Weise wird hierdurch eine einfach funktionierende Dosier- und Verteilereinrichtung für die Geruchsstofflüssigkeit erhalten, wobei beim Absinken des Spiegels der Geruchsstofflüssigkeit im Verteilerbehälter unter einem bestimmten Wert der Durchgang geöffnet wird und so Geruchsstofflüssigkeit aus dem Speicherbehälter durch den Durchgang in den Verteilerbehälter fließen kann.

Erfindungsgemäß ist der Verteilerbehälter nach oben hin offen und von einer Abdeckung oder vom Windflügel abdeckend überdacht, sodaß dadurch der Verteilerbehälter nach oben hin vor Witterungseinflüssen geschützt, jedoch der Austritt von Geruchsstoffen in die umgebende Atmosphäre ungehindert möglich ist.

Die Erfindung besteht überdies darin, daß der Windflügel mindestens zwei sich horizontal erstreckende am oberen Endbereich der Welle befestigte Flügelarme aufweist, an welchen zumindest nach unten weisende Flügel angeordnet sind, wodurch eine wirksame Verteilung von Geruchsstoffen an die umgebende Atmosphäre sicher gewährleistet ist.

Um auch in optischer Hinsicht den Schutz gegen Verbiß oder Verfegen durch Wild zu erhöhen, ist erfindungsgemäß vorgesehen, daß die Flügel eine glänzende, lichtreflektierende Oberfläche aufweisen oder mit Lichtreflektoren versehen sind.

Um die Schutzvorrichtung auch in akustischer Hinsicht wirksam werden zu lassen, ist erfindungsgemäß vorgesehen, daß der Windflügel als Klangkörper ausgebildet ist oder vorzugsweise mittels Anschlagstreifen mit einem oder mehreren Schall- oder Schwingungsgebern, die vorzugsweise fest mit dem Unterteil der Vorrichtung verbunden sind, in Wirkverbindung steht.

Nach einem weiteren Merkmal der Erfindung ist der Aufnahmeteil mit einem Erdanker, einer Konsole oder einem Teleskopgestänge verbunden und von diesem getragen. Durch diese Ausbildung ist eine optimale Aufstellung der Schutzvorrichtung und die Erzielung ihrer größtmöglichen Wirksamkeit gewährleistet, wobei auch insbesondere vom Schwingungsgeber herrührende Schwingungsimpulse über diese Vorrichtungsteile in den Erdboden geleitet werden können. Dadurch ist auch ein wirksamer Schutz gegen Verbiß durch Wühlmäuse erzielbar.

Eine weitere Ausgestaltung der Schutzvorrichtung gemäß der Erfindung besteht darin, daß vorzugsweise im Bereich unterhalb des Verteilerbehälters ein korb- oder netzartiges Behältnis zur Aufnahme von Tier- oder Menschenhaaren vorgesehen ist, das in seinem unteren Bereich am Aufnahmeteil bzw. diesen tragenden Erdanker, Konsole oder Teleskopgestänge befestigt ist. Die in dem korb- oder netzartigen Behältnis angeordneten Tier- oder Menschenhaare erhöhen durch ihren Geruch noch die Wirksamkeit der Schutzvorrichtung.

In der Zeichnung ist der Gegenstand der Erfindung anhand zweier Ausführungsformen näher erläutert, worin Fig. 1 eine Schnittansicht einer ersten Ausführungsform der erfindungsgemäßen Schutzvorrichtung, Fig. 2 eine Schnittansicht einer zweiten Ausführungsform der erfindungsgemäßen Schutzvorrichtung und Fig. 3 und Fig. 3b im Detail bei der erfindungsgemäßen Schutzvorrichtung verwendete Schall- oder Schwingungsgeber zeigen.

Die Schutzvorrichtung umfaßt einen Aufnahmeteil 1, der mit einem Verteilerbehälter 2 verbunden ist. Der Verteilerbehälter kann aber auch vom Aufnahmeteil selbst gebildet werden. Auf dem Aufnahmeteil 1 bzw. vom Verteilerbehälter 2 nach oben aufragend, ist ein rohrförmiger Behälter, der als Speicherbehälter 3 für eine Geruchsstofflüssigkeit 4 dient, angeordnet. Im unteren Teil des Speicherbehälters 3 ist ein Verschlußteil 5 vorgesehen, der mittig von einem Durchgang 6 vertikal durchsetzt wird. Das obere Ende des Speicherbehälters 3 ist mit einer Abdeckkappe 7 verschlossen, die abnehmbar in das obere Ende des Speicherbehälters 3 eingesetzt ist. Die Abdeckkappe 7 dient zur Lagerung einer Welle 8, die die Abdeckkappe 7 vertikal durchsetzt. Die Welle 8 trägt an ihrem oberen Ende einen Windflügel 9, der mit jener lösbar verbunden ist. Der Windflügel 9 ist als Horizontalwindflügel ausgebildet, der aus mehreren sich horizontal erstreckenden Flügelarmen 10 gebildet ist, die Flügel 11 tragen.

Die Welle 8 ist nach unten bis an den Durchgang 6 geführt, wobei das untere Ende der Welle 8 mit einem vorzugsweise schräg abgeflachten Fortsatz 12 versehen ist, der in den Durchgang 6 des Verschlußteils 5 hineinragt. Oberhalb des Verschlußteils 5 ist am unteren Ende der Welle 8 noch ein Quirlkörper 13 aufgesetzt.

Bei Drehung des Windflügels wird auf diese Weise die Geruchsstofflüssigkeit zur Verhinderung ihrer Entmischung umgewälzt und überdies mittels des in den Durchgang hineinreichenden Fortsatzes 12 die Durchgangsöffnung 6 ständig gereinigt und freigehalten, so daß selbst bei langen Stehzeiten der Durchfluß von Geruchsstofflüssigkeit vom Speicherbehälter 3 in den Verteilerbehälter 2 gewährleistet ist. Der Durchfluß der Geruchsstofflüssigkeit durch den Durchgang 6 wird mittels eines Schwimmerventils 14 geregelt. Das Schwimmerventil 14 besteht aus einem Schwimmerkörper 15 und einem Dichtungskörper 16, der an seinem oberen Ende einen O-Ring 17 trägt und mit dem Verschlußteil 5 nach oben hin den Speicherbehälter 3 abdichtet. das Schwimmerventil 14 kann aber auch einteilig aus Kunststoff hergestellt sein.

Wenn der Spiegel 18, der im Verteilerbehälter 2 befindlichen Geruchsstofflüssigkeit 4 auf ein festgelegtes Minimum sinkt, gibt das auf der im Verteilerbehälter 2 befindlichen Geruchsstofflüssigkeit 4 aufschwimmende Schwimmerventil 14 die Durchgangsöffnung 6 frei, so daß aus dem Speicherbehälter 3 Geruchsstofflüssigkeit 4 in den Verteilerbehälter 2 fließen kann.

Wenn anderseits der Spiegel 18, der im Verteilerbehälter 2 befindlichen Geruchsstofflüssigkeit 4 an oder über einem festgelegten Maximum ist, hält das Schwimmerventil 14 den Durchgang 6 verschlossen.

Speziell unter der Wirkung des Windflügels wird Geruchsstoff bzw. Geruchsstofflüssigkeit an die umgebende Atmosphäre abgegeben, so daß im Zuge dessen der Spiegel 18 der Geruchsstofflüssigkeit im Verteilerbehälter 2 absinkt. Ist dabei das festgelegte Minimum des Flüssigkeitsspiegels 18 wieder erreicht, wird das Schwimmerventil 14 wieder in seine Offenstellung versetzt, sodaß der Verteilerbehälter 2 neuerlich mit Geruchsstofflüssigkeit 4 aufgefüllt wird. Auf diese Weise wird ein sehr einfaches Dosier- und Regelsystems geschaffen, das über lange Zeit hin ein wirksames wartungsfreies Funktionieren der Schutzvorrichtung garantiert. Ein Nachfüllen von Geruchsstofflüssigkeit in den Speicherbehälter 3 ist nur in größeren Zeitabständen erforderlich. Zu diesem Zweck wird die aus einer aus Abdeckkappe 7, Welle 8 und Windflügel 9 gebildete Einheit abgenommen, sodaß von oben her der Speicherbehälter 3 mit der Geruchsstofflüssigkeit 4 befüllbar ist.

Der Aufnahmeteil 1 ist mit einem nach unten weisenden, vorzugsweise lösbar angeordneten Erdanker oder Teleskopgestänge 19, die zum Aufstellen der Schutzvorrichtung bzw. zum Verankern der Schutzvorrichtung im Erdboden dienen, verbunden oder mit einer Konsole ausgestattet.

Im Bereich unterhalb des Verteilerbehälters 2 ist noch ein korb- oder netzartiges Behältnis 20 angeordnet, das zur Aufnahme von weiteren Geruchsstoffen, wie z.B. Tier- oder Menschenhaaren, dient. Das Behältnis 20 ist unten an der Konsole, dem Erdanker oder dem Teleskopgestänge abgestützt und an diesem lösbar befestigt.

Auf dem Verteilerbehälter 2 ist an einer Seite noch ein Schall- oder Schwinggeber 21 aufgesetzt, der mit den Flügeln 11 des Windflügels 9 in Wirkverbindung steht.

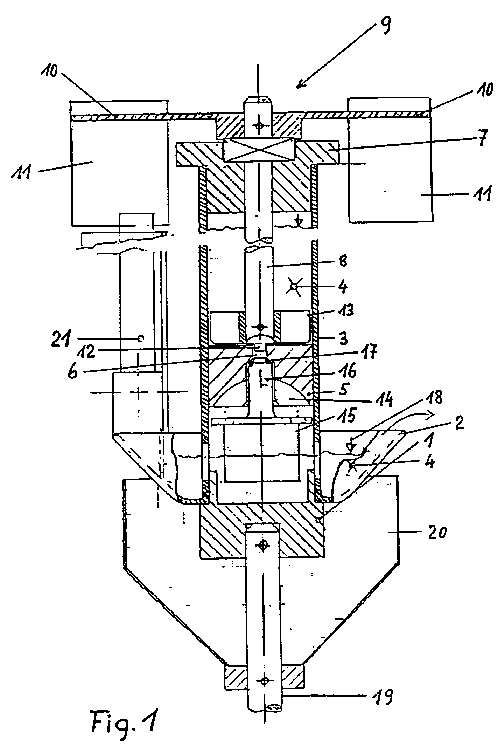

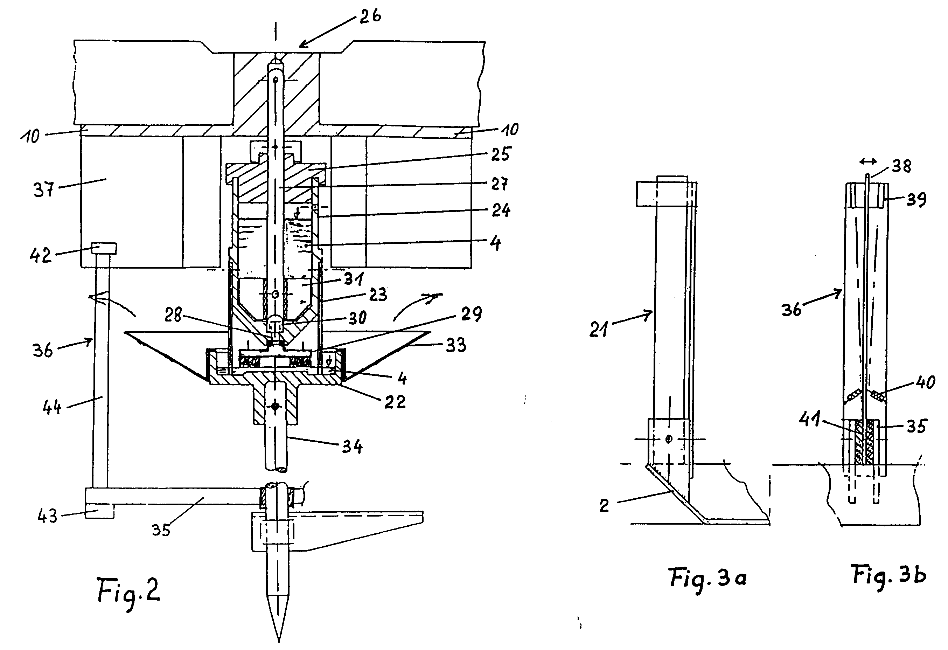

Gemäß Fig 2 ist eine weitere Ausführungsform der erfindungsgemäßen Schutzvorrichtung dargestellt, die wiederum einen Aufnahmeteil 22 aufweist, in welchem allerdings der Verteilerbehälter für die Geruchsstofflüssigkeit integriert ist. Vom den Verteilerbehälter bildenden Aufnahmeteil 22 ragt ein Rohrstück 23 auf, in welches der Speicherbehälter 24 eingesetzt ist. Das obere Ende des Speicherbehälters 24 ist durch die Abdeckkappe 25 verschlossen, die abnehmbar in den Speicherbehälter eingesetzt ist. Die vorzugsweise pfropfenartig ausgebildete Abdeckkappe 25 dient wiederum zur Lagerung der an ihrem oberen Ende den Windflügel 26 tragenden Welle 27. Im unteren Ende des Speicherbehälters 24 für die Geruchsstofflüssigkeit 4 ist ein Durchgang 28 vorgesehen, durch welchen Geruchsstofflüssigkeit in den Verteilerbehälter 22 fließen kann; der Durchgang 28 ist in gleicher Weise, wie bei der Ausführungsform gemäß Fig. 1 mittels des Schwimmerventiles 29 öffenbar und verschließbar. Zur Reinigung bzw. Freihaltung der Durchgangsöffnung 28 trägt die Welle 27 an ihrem unteren Ende wiederum den in den Durchgang hineinreichenden Fortsatz 30. Darüber ist auf der Welle 27 der Quirlkörper 31 angeordnet.

Das Rohrstück 23 ist in seinem unteren Endbereich mit seitlichen Austrittsöffnungen 32 für die Geruchsstofflüssigkeit in den Verteilerbehälter 22 versehen. Der Aufnahmeteil bzw. der Verteilerbehälter 22 trägt noch zusätzlich eine Auffangschale 33.

Der Aufnahmeteil 22 ist auf einem Befestigungsstab, Erdanker oder Teleskopgestänge 34 aufgesteckt, womit die Schutzvorrichtung im Erdboden fest aufgestellt und in diesem verankert werden kann. Insbesondere bei der Ausführung mit einem Erdanker wird die Vorrichtung mit dem Fuß mittels einer Tretauflage schnell und sicher verankert. Die Tretauflage dient zusätzlich als Abstützfläche bei weichen Böden. Wird hingegen der Erdanker in einem Metallrohr lose gelagert, überträgt sich die durch den Schalleffekt entstandene Schwingung in das Erdreich, wodurch ein wirksamer Abschreckeffekt für Erdnager (Wühlmäuse etc.) erzielt wird. Durch die Ausführung mit Konsole wird die Vorrichtung schnell frei schwebend aufgehängt montiert. Wird dagegen ein Teleskopgestänge zur freistehenden Aufstellung der Vorrichtung verwendet, wird die Flächenleistung der Schutzvorrichtung wesentlich erhöht.

Mit der Befestigungsstange bzw. dem Teleskopgestänge ist ein Befestigungsteil 35 lösbar verbunden, der als Träger für den Schall- oder Schwingungsgeber 36 dient. Der Schall- oder Schwimmungsgeber steht wiederum mit den Flügeln 37 des Horizontalwindflügels 26 in Wirkverbindung.

In Fig. 3a und 3b sind im Detail ein Schall- oder Schwingungsgeber 21, 36 veranschaulicht. Der Schall- oder Schwingungsgeber 21 ist gemäß Fig. 3a mit dem Verteilerbehälter 2 verbunden. Gemäß Fig. 3b besteht der Schall- oder Schwingungsgeber aus einem Schwenkkörper 38, der mit dem Befestigungsteil 35 verbunden ist. Desweiteren weist der Schall- oder Schwingungsgeber einen Anschlagteil 39, der in Verbindung mit einer Federverstärkung 40 und einer flexiblen Lagerung 41 verstärkt Schwingungen ins Erdreich über den vorzugsweise hierbei aus Metall bestehenden Befestigungsteil 35 und die mit diesem verbundene Befestigungsstange oder Teleskopgestänge in das Erdreich übertragen. Dadurch wird ein besonders wirksamer Schutz gegen Verbiß durch Wühlmäuse erhalten. Wie in Fig. 2 angedeutet, ist der Schall- oder Schwingungsgeber an seinem oberen Ende mit einem Auslöseteil 42 und an seinem unteren Ende mit einem glatten Körper 43 versehen.

Der Windflügel 9, 26 erzeugt auch schon bei geringem Wind Geräusche, in dem er selbst als Klangkörper ausgeführt ist oder mittels Anschlagstreifen über solche streicht. Der Windflügel 9, 26 ist als Horizontalwindflügel ausgeführt und erzeugt bei Wind einen Luftwirbel, der mitwirkt, vermehrt Geruchsstoffe aus der im Verteilerbehälter befindlichen Geruchsstofflüssigkeit freizusetzen und diese großflächig zu verteilen.

Der Windflügel 9, 26 ist vorteilhafterweise selbst mit einer glatten, lichtreflektierenden Oberfläche ausgeführt, wobei der Lichtreflexionseffekt noch bei Drehung des Windflügels verstärkt wird.

Mittels der erfindungsgemäßen Vorrichtung kann nicht nur ein wirksamer Schutz gegen Verbiß und Verfegen von Pflanzen, insbesondere Sträucher und Bäumen, mit Hilfe großflächig verteilter Geruchsstoffe, sondern auch durch optische Effekte und durch Erzeugen von Schall- oder auch in dem Boden übertragbare Schwingungen erzielt werden.

## Patentansprüche

1. Schutzvorrichtung gegen Verbiß oder Verfegen von Pflanzen, insbesondere Sträuchern und Bäumen, durch Tiere, insbesondere Wild oder Wühlmäusen, dadurch gekennzeichnet, daß die Vorrichtung einen mit einem Aufnahmeteil (1, 22) verbundenen oder von diesem gebildeten nach außen offenen Verteilerbehälter (2, 22) für eine zu verdunstende) Geruchsstofflüssigkeit (4) und einen darüber angeordneten, vorzugsweise rohrförmigen Speicherbehälter (3, 24) für die Geruchsstofflüssigkeit(4), der mit dem Verteilerbehälter (2, 22) über einen mittels Ventil (14, 29) öffenbaren und verschließbaren Durchgang (6, 28) in Verbindung steht, der gegebenenfalls in einem im unteren Bereich des Speicherbehälters (3, 24) angeordneten Verschlußteils (5) vorgesehen ist, und daß die Vorrichtung einen Windflügel (9, 26) aufweist, der kraftschlüssig mit einer Welle (8, 27) verbunden ist, die vertikal ausgerichtet und in einer das obere Ende des Speicherbehälters (3, 24) verschließenden, vorzugsweise abnehmbar angeordneten Abdeckkappe (7, 25) drehbar gelagert ist.

2. Schutzvorrichtung nach Anspruch 1, dadurch gekennzeichnet, daß die Welle bis an den Durchgang (6, 28) vom Speicherbehälter (3, 24) in den Verteilerbehälter (2, 22) geführt ist und mit einem an ihrem unteren Ende angeordneten, vorzugsweise seitlich abgeflachten Fortsatz (12, 30) in den Durchgang (6, 28) hineinreicht.

3. Schutzvorrichtung nach Anspruch 1 oder 2, dadurch gekennzeichnet, daß am unteren Ende der Welle (8, 27) ein Quirlkörper (13, 31) angeordnet ist.

4. Schutzvorrichtung nach einem der Ansprüche 1 bis 3, dadurch gekennzeichnet, daß das den Durchgang (6, 28) vom Speicherbehälter (3, 24) zum Ventilbehälter (1, 22) öffenbare und verschließbare Ventil (14, 29) ein Schwimmerventil ist, dessen Schwimmkörper (15) auf der im Verteilerbehälter (3, 24) befindlichen Geruchsstofflüssigkeit (4) aufschwimmt.

5. Schutzvorrichtung nach einem der Ansprüche 1 bis 4, dadurch gekennzeichnet, daß der Verteilerbehälter (3, 24) oben offen ist und von einer Abdeckung oder von dem Windflügel (9, 26) abdeckend überdacht ist.

6. Schutzvorrichtung nach einem der Ansprüche 1 bis 4, dadurch gekennzeichnet, daß der Windflügel (9, 26) ein Horizontalwindflügel ist, der vorzugsweise mindestens zwei sich horizontal erstreckende am oberen Endbereich der Welle (8, 27) befestigte Flügelarme (10) aufweist, an welchen zumindest nach unten weisende Flügel (11, 37) angeordnet sind.

7. Schutzvorrichtung nach Anspruch 1, dadurch gekennzeichnet, daß der Windflügel (9, 26) eine glänzende, lichtreflektierende Oberfläche aufweist oder mit Lichtreflektoren versehen ist.

8. Schutzvorrichtung nach Anspruch 6 oder 7, dadurch gekennzeichnet, daß der Windflügel (9, 26) als Klangkörper ausgebildet ist oder vorzugsweise mit mittels Anschlagstreifen (44) mit einem oder mehreren Schall- oder Schwingungsgebern (21, 36), die vorzugsweise fest mit dem Unterteil der Vorrichtung verbunden sind, in Wirkverbindung stehen.

9. Schutzvorrichtung nach einem der Ansprüche 1 bis 8, dadurch gekennzeichnet, daß der Aufnahmeteil (1, 22) mit einer Konsole versehen ist oder mit einem Erdanker oder Teleskopgestänge (19, 34) verbunden und von diesen getragen ist.

10. Schutzvorrichtung nach Anspruch 9, dadurch gekennzeichnet, daß im Bereich unterhalb des Verteilerbehälters 2, 22) ein korb- oder netzartiges Behältnis (20) zur Aufnahme von Tier- oder Menschenhaaren vorgesehen ist, das in seinem unteren Bereich am Aufnahmeteil bzw. diesen tragenden Erdanker, Konsole oder Teleskopgestänge befestigt ist.

## Claims

1. A protective device against browsing and shedding of plants, in particular of shrubs and trees, by animals, in particular game or voles, characterized in that the device comprises an outwardly open distributor reservoir (2, 22) for an odour-producing liquid (4) intended for evaporation, which reservoir is connected with or formed by a receiving part (1, 22), and a storage reservoir (3, 24) for the odour-producing liquid (4), which storage reservoir is arranged above the said distributor reservoir, is preferably tubular and is in connection with the distributor reservoir (2, 22) by way of a passage (6, 28) which can be opened or closed by means of a valve (14, 29) and is optionally arranged in a locking part (5) disposed in the lower region of the storage reservoir (3, 24), and that the device is provided with an air vane (9, 26) which is non-positively connected with a shaft (8, 27) which is perpendicularly aligned and is rotatably held in a cover cap (7, 25) which is preferably arranged so as to be removable and closes off the upper end of the storage reservoir (3, 24).

2. A protective device as claimed in claim 1, characterized in that the shaft is guided right up to the passage (6, 28) from the storage reservoir (3, 24) into the distributor reservoir (2, 22) and projects into the passage (6, 28) with an extension (12, 30) which is arranged at its lower end and is preferably laterally flattened.

3. A protective device as claimed in claim 1 or 2, characterized in that a twirling body (13, 31) is arranged at the lower end of the shaft (8, 27).

4. A protective device as claimed in one of the claims 1 to 3, characterized in that the valve (14, 29) which can close or open the passage (6, 28) from the storage reservoir (3, 24) to the valve container (1, 22) is a float valve whose floating body (15) floats on the odour-producing liquid (4) disposed in the distributor reservoir (3, 24).

5. A protective device as claimed in one of the claims 1 to 4, characterized in that the distributor reservoir (3, 24) is open at the top and is covered by a cap or is roofed over by the air vane (9, 26) in a covering manner.

6. A protective device as claimed in one of the claims 1 to 4, characterized in that the air vane (9, 26) is a horizontal air vane which preferably is provided with at least two vane arms (10) which extend horizontally, are fastened to the upper end zone of the shaft (8, 27) and on which wings (11, 37) are arranged which face at least downwardly.

7. A protective device as claimed in claim 1, characterized in that the air vane (9, 26) is provided with a shiny, light-reflecting surface or is provided with light reflectors.

8. A protective device as claimed in claim 6 or 7, characterized in that the air vane (9,26) is arranged as a sound body or is preferably operatively connected by means of striking bars (44) with one or several sources of sound or vibrations (21, 36) which are preferably rigidly connected with the lower part of the device.

9. A protective device as claimed in one of the claims 1 to 8, characterized in that the receiving part (1, 22) is provided with a bracket or with a ground anchor or a telescopic rod assembly (19, 34) and is supported by the same.

10. A protective device as claimed in claim 9, characterized in that in the zone below the distributor reservoir (2, 22) there is provided a basket- or net-like receptacle (20) for receiving hair of animals or humans which in its lower zone is fastened to the receiving part or the ground anchor, bracket or telescopic rod assembly which supports the same.

## Revendications

1. Dispositif de protection contre les dégâts causés aux plantes, en particulier des arbustes et des arbres, par les animaux, en particulier du gibier ou des campagnols, caractérisé en ce que le dispositif présente un récipient de distribution (2, 22) pour une substance odorante liquide (4) à vaporiser, récipient ouvert vers l'extérieur et raccordé à ou formé par un réceptacle (1, 22), et un réservoir (3, 24), de préférence tubulaire, placé au-dessus de celui-ci, pour la substance odorante liquide (4), et qui est en communication avec le récipient de distribution (2, 22) via un passage (6, 28) qui peut être ouvert et fermé à l'aide d'une soupape (14, 29) et qui peut être prévu éventuellement dans un élément d'obturation (5) agencé à la partie inférieure du réservoir (3, 24), et en ce que le dispositif présente un moulinet régulateur (9, 26) qui est raccordé par adhérence à un arbre (8, 27) qui est orienté verticalement et est monté de façon à pouvoir tourner dans un capuchon (7, 25), de préférence amovible, obturant l'extrémité supérieure du réservoir (3, 24).

2. Dispositif de protection selon la revendication 1, caractérisé en ce que l'arbre est guidé jusqu'au passage (6, 28) reliant le réservoir (3, 24) au récipient de distribution (2, 22) et s'avance dans le passage (6, 28), par un prolongement (12, 30), de préférence aplati latéralement, prévu à son extrémité inférieure.

3. Dispositif de protection selon la revendication 1 ou 2, caractérisé en ce qu'un corps tournoyant (13, 31) est agencé à l'extrémité inférieure de l'arbre (8, 27).

4. Dispositif de protection selon l'une des revendications 1 à 3, caractérisé en ce que la soupape (14, 29) ouvrant et fermant le passage (6, 28) reliant le réservoir (3, 24) au récipient à soupape (1, 22) est une soupape à flotteur dont le flotteur (15) flotte à la surface de la substance odorante liquide (4) présente dans le récipient de distribution (3, 24).

5. Dispositif de protection selon l'une des revendications 1 à 4, caractérisé en ce que le récipient de distribution (3, 24) est ouvert en haut et est chapeauté pour être recouvert par un élément de recouvrement ou par le moulinet régulateur (9, 26).

6. Dispositif de protection selon l'une des revendications 1 à 4, caractérisé en ce que le moulinet régulateur (9, 26) est un moulinet régulateur horizontal qui présente de préférence deux bras d'ailettes (10) s'étendant à l'horizontale fixés dans la zone de l'extrémité supérieure de l'arbre (8, 27) et sur lesquels sont montées des ailettes (11, 37) dirigées au moins vers le bas.

7. Dispositif de protection selon la revendication 1, caractérisé en ce que le moulinet régulateur (9, 26) présente une surface brillante réfléchissant la lumière ou est muni de réflecteurs de lumière.

8. Dispositif de protection selon la revendication 6 ou 7, caractérisé en ce que le moulinet régulateur (9, 26) est conçu comme un corps sonore ou est de préférence relié, fonctionnellement, à l'aide d'un ruban d'accrochage (44), à un ou plusieurs dispositifs acoustiques ou oscillatoires (21, 36) qui sont, de préférence, solidarisés à la partie inférieure du dispositif.

9. Dispositif de protection selon l'une des revendications 1 à 8, caractérisé en ce que le réceptacle (1, 22) est muni d'une console ou est raccordé à un tirant d'ancrage ou à une barre télescopique (19, 34) et supporté par ces derniers.

10. Dispositif de protection selon la revendication 9, caractérisé en ce que dans la zone située en dessous du récipient de distribution (2, 22), on a prévu une cage (20) du type corbeille ou filet, pour réceptionner des poils d'animaux ou des cheveux, qui est fixée, dans sa zone inférieure, au réceptacle ou au tirant d'ancrage, à la console ou à la barre télescopique le supportant.
